# EUROPEAN PATENT SPECIFICATION

(11) **EP 3 569 928 B1**
(45) Date of publication and mention of the grant of the patent: **21.04.2021**
(21) Application number: 19171499.7
(22) Date of filing: 29.04.2019
(51) Int. Cl.: F23K 5/14, F23D 5/14, F24C 5/18

(54) **LIQUID FUEL BURNER**
BRENNER FÜR FLÜSSIGBRENNSTOFF
BRÛLEUR À COMBUSTIBLE LIQUIDE

(30) Priority: 18.05.2018 JP 2018096609
(43) Date of publication of application: 20.11.2019
(73) Proprietor: Pet Engineering & Services SRL, 24050 Calcinate (BG) (IT); TOYOTOMI CO., LTD., Nagoya-shi, Aichi (JP)
(72) Inventor: SONZOGNI, Sergio, 24050 Calcinate (BG) (IT); WALTON, Philip, Bishop Auckland, County Durham DL14 6UF (GB)
(74) Representative: Mewburn Ellis LLP

(56) References cited:
- EP-A1- 1 389 715
- JP-A- 2001 147 010
- JP-A- 2004 245 514
- JP-B2- H0 752 007

## Description

### TECHNICAL FIELD OF THE INVENTION

This invention relates to liquid fuel burners as used in portable heaters that burn liquid hydrocarbon fuel such as paraffin (kerosene).

### BACKGROUND

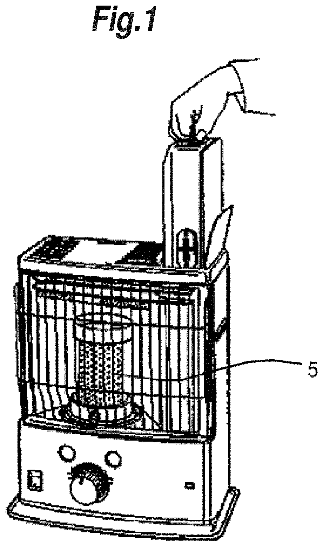

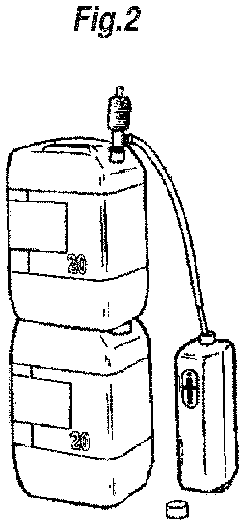

Portable paraffin (kerosene) heaters sometimes have a removable fuel tank that supplies fuel to a small holding tank or reservoir which is fixed within the heater. Typically, the fuel tank is removed by lifting it through a door in the top of the heater as shown in Fig. 1 hereof. The tank is refilled from a bulk container (typically 20 litres) using a syphon tube - see Fig. 2 hereof. During this process the bulk container needs to be elevated above the fuel tank, and this is often achieved by placing the container on a second bulk container, as shown.

The removable fuel tank is provided with a spring-loaded shut-off valve that automatically closes as the tank is removed from the heater. When the refilled tank is re-inserted into the heater the shut-off valve enters an adapter fitted to the holding tank and the adapter opens the valve allowing fuel to enter the holding tank.

The refilling of the tank is a messy and potentially dangerous operation as it involves flammable liquids and there is a considerable risk of fuel spillage.

The present invention seeks to provide a new and inventive form of liquid fuel burner which reduces the danger of fuel spillage whilst being inexpensive and reliable.

EP1389715A1 discloses a liquid fuel burner as specified in the preamble of claim 1, comprising an assembly of a heater and a fuel holder placeable on the heater.

JP2004245514A discloses an oil burning appliance.

JPH0752007B2 discloses an oil feeding device.

JP2001147010A discloses a liquid fuel supplying device.

### SUMMARY OF THE INVENTION

According to the present invention there is provided a liquid fuel burner as specified in claim 1.

The liquid fuel burner according to the present invention may optionally be as specified in any one of claims 2 to 5.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a known form of paraffin (kerosene) heater which incorporates a liquid fuel burner with a refillable fuel tank;
Figure 2 is a general view of the refillable fuel tank in the process of being refilled using two bulk fuel containers and a syphon tube;
Figure 3 is a general view of a liquid fuel burner which includes a single use container;
Figure 4 is a sectional view of the fuel shut-off valve and adapter of the liquid fuel burner before engagement of the single use container;
Figures 5 to 8 are similar sectional views of the fuel shut-off valve and adapter showing four successive stages in the engagement of the container;
Figure 9 is another sectional view showing a modified form of the adapter before engagement of the single use container;
Figure 10 is a similar sectional view after engagement of the single use container; and
Figure 11 is a further sectional view of the modified adapter perpendicular to the section of Fig. 9.

### DETAILED DESCRIPTION OF THE DRAWINGS

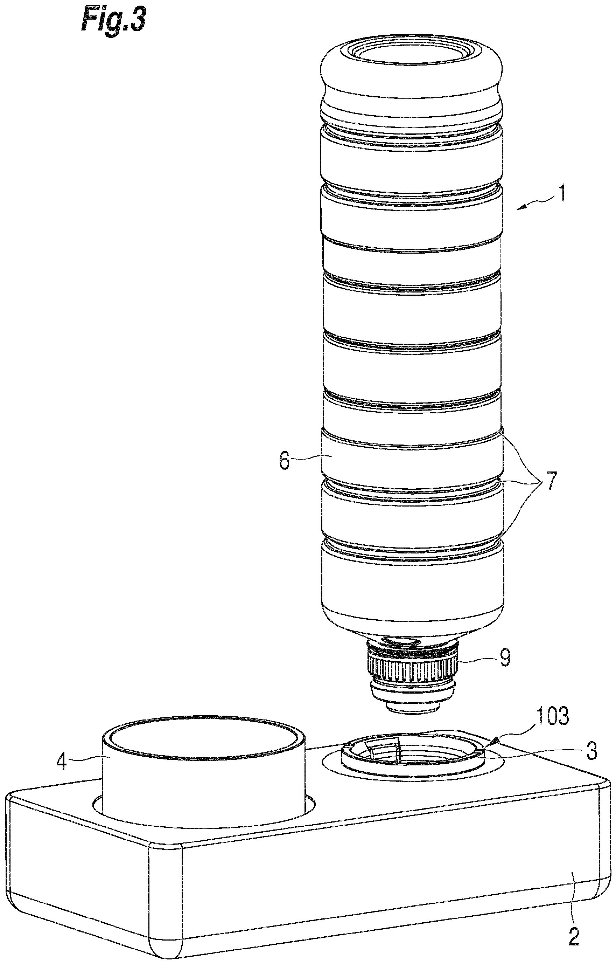

Referring firstly to Fig. 3, the fuel delivery system is intended to be installed in a portable paraffin (kerosene) heater of the general kind illustrated in Fig. 1. The fuel delivery system has a replaceable single use fuel container 1 and a reservoir tank (liquid fuel tank) 2 which is permanently installed in the heater. The reservoir tank 2 has a fuel feed inlet port (fuel feed port) 102 provided with an adapter attachment 3 for engagement with the fuel container 1 and a wick element 4 for feeding fuel from the reservoir tank to a burner 5, Fig. 1, which is provided within the heater. Other means of supplying the fuel from the reservoir tank to the burner could be used in accordance with known burner technologies.

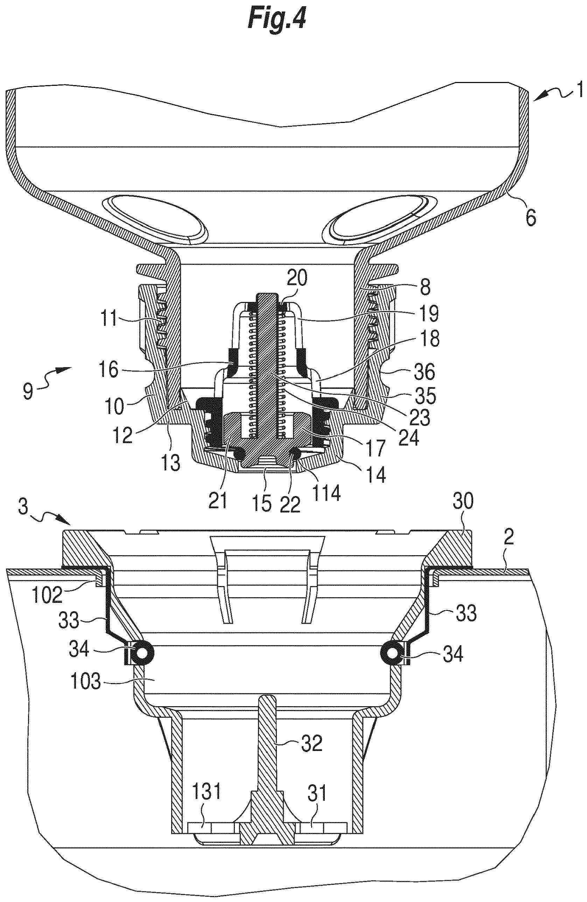

The single use fuel container 1 comprises a container body 6 in the form of a low-cost light weight moulded thin-wall plastic bottle, typically between 1 litre and 2 litres capacity, which is pre-filled with a liquid hydrocarbon fuel, generally paraffin (kerosene) . Although the bottle (container body) 6 could be of various shapes it preferably has a cylindrical side wall as shown with a series of circumferentially-extending moulded grooves 7 to prevent the bottle from collapsing inwards as it empties (see below) . Extensive tests have been carried out to confirm that plastic bottles are capable of withstanding the temperatures which would be encountered in such liquid fuel burners. As shown in Fig. 4, the bottle 6 has a neck (discharge port) 8 at one end forming a single fuel discharge port, and the neck is fitted with a non-removable spring-loaded shut-off valve assembly (valve assembly) 9. The valve 9 includes an outer cup-shaped moulding 10 which is shown engaged on the neck by means of screw threads 11. Preferably the valve is non-removably attached to the bottle after filling, e.g. by use of an adhesive, heat welding, moulded locking formations etc. so that, for safety reasons, the container cannot be re-filled. An internal V-bead 12 is formed on end wall 13 of the moulding 10 to sealably engage the inner surface of the neck 8 and prevent leakage. The end wall 13 is also stepped to form a central boss (valve seat structure) 14 forming a valve seat structure having a central opening 15 surrounded by a valve seat 114. The moulding 10 contains an inner valve housing 16 which is screw-threadedly engaged, clipped, welded, or otherwise fixed within the boss 14 to receive a valve element 17. Immediately above the boss 14 the wall of the valve housing 16 contains outlet ports 18, above which there are a number of inlet ports 19 which surround a central aperture 20. The valve element 17 comprises a valve member 21 which carries an O-ring 22 to sealably co-operate with the valve seat 114, and a valve stem 23 which extends through the aperture 20. An energizing element in the form of a compression spring (energizing element) 24 is carried on the stem 23 bearing against the valve head (valve member) 21 and the upper end of the valve housing 16, urging the valve member 21 to sealably close the opening 15.

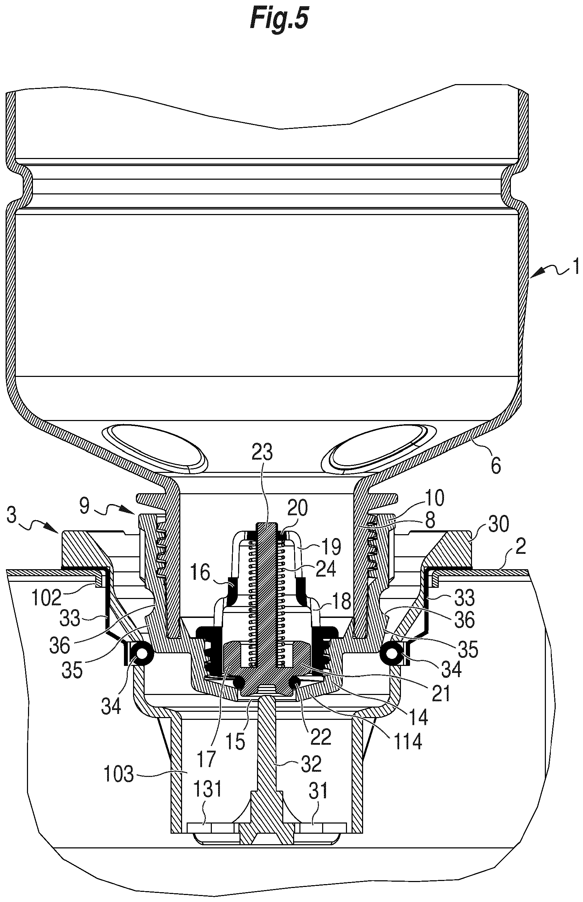

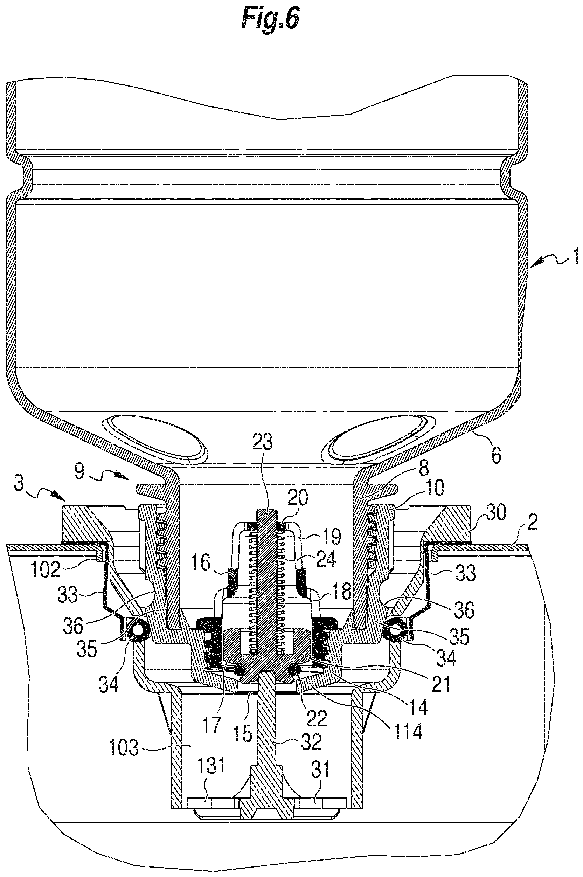

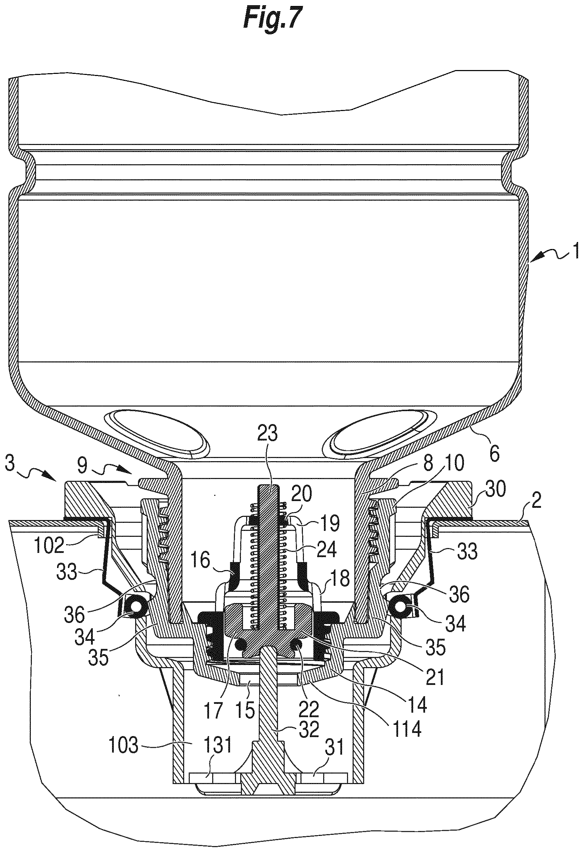

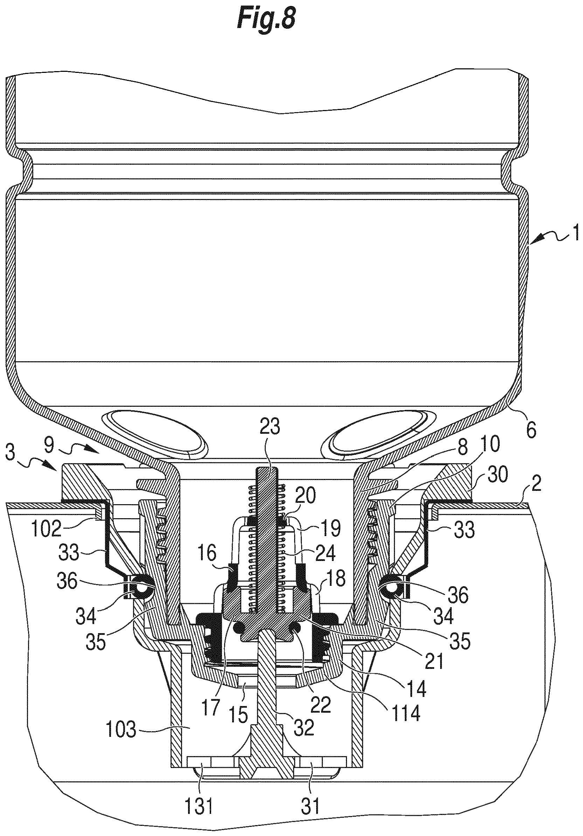

The adapter (attachment) 3 is fitted into the fuel feed port 102 in the top wall of the reservoir 2 and incorporates a recessed portion 103 to receive the valve seat structure 14 of the fuel shut-off valve 9, being wider at the top with an annular flange 30 seated on the outside of the reservoir to support the bottle 6. The lower end of the adapter attachment contains a spider 31 which supports an upwardly-projecting actuating pin 32 and includes fuel discharge holes 131 through which liquid fuel may enter the fuel tank 2. The adapter 3 has at least two spring latch arms (resilient element) 33 which extend from the flange 30 down the outside of the adapter 3 and carry respective roller latches (latch projections) 34 that project through the wall of the recessed portion 103. When the bottle 6 is received on the adapter 3 the rollers 34 travel up a tapered leading end 35 of the outer moulding 10 - Figs. 5 to 7, urging the rollers in an outward direction against the action of spring latch arms 33. At the same time, the actuating pin 32 engages the valve member 21 urging the valve member away from the valve seat 114 and overcoming the force of the compression spring 24. When the shut-off valve is fully inserted into the recessed portion 103 the rollers 34 spring into an annular latching groove (latching feature) 36 formed externally on the moulding 10 immediately above the tapered portion 35 - see Fig. 8.

The flow of fuel into the internal fuel tank 2 is controlled by the fact that flow can only take place when the level of fuel in the reservoir falls below the level of the opening 15, thus allowing air to enter the shut-off valve and flow into the bottle 6 through the upper inlet ports 19 and hence allowing fuel to leave the bottle through the lower outlet ports 18 and the opening 15. The circular profile of the bottle combined with the circumferential grooves 7 resists the tendency of the lightweight bottle to deform inwardly which would allow the fuel to leave the container at an uncontrolled rate.

The force required to open the shut-off valve is typically about 500g. Although the weight of the full container may be 1, 750g the weight of the empty container is only about 150g, which is not enough to hold the valve open against the closing action of the energizing spring 24. As the fuel is consumed the total weight of the container reduces and the valve would close before all of the fuel had been consumed. The latching groove 36 and spring-loaded roller latches 34 ensure that the bottle is firmly held with the valve open until all of the fuel has been emptied from the bottle. The latching feature on the single use bottle should ideally engage the corresponding latch arrangement automatically under the weight of the filled bottle and hold the bottle in place when empty. The empty bottle will then need to be forcibly pulled out of the adapter when it is removed.

It is important to note that the latching arrangement does not require any rotation of the bottle during engagement and disengagement.

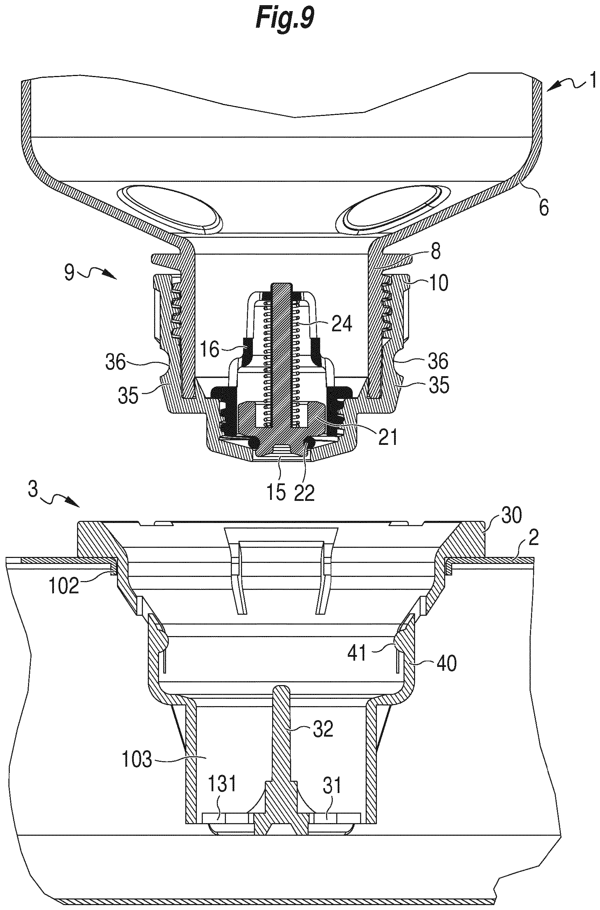

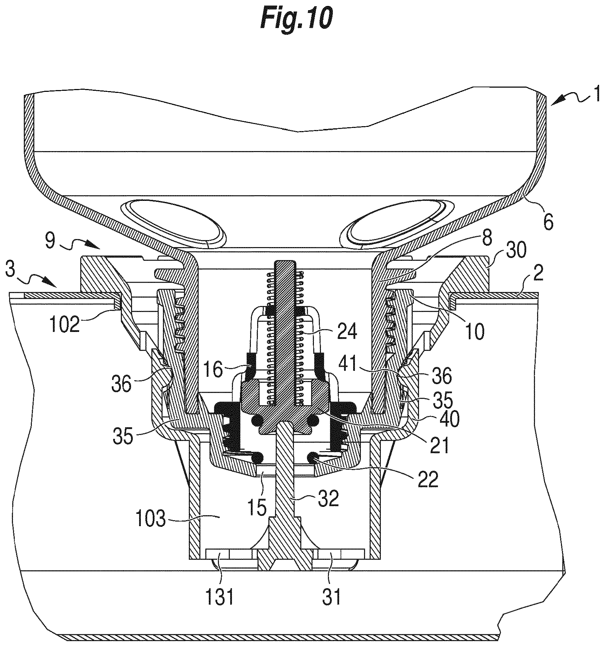

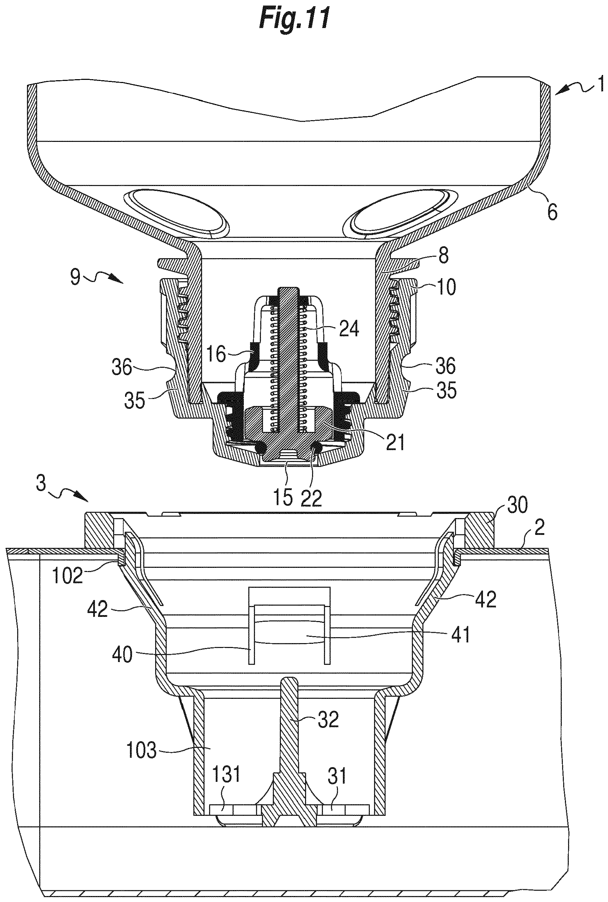

The latch arrangement, which incorporates a sprung arm and roller, facilitates smooth engagement and disengagement of the bottle. However, the latches could be incorporated into the adapter moulding to reduce cost of manufacture, as shown in Figs. 9 to 11. In this embodiment the adapter 3 incorporates integral spring fingers (resilient element) 40 which carry rounded latch projections 41 to engage the latching groove 36. Fig. 11 also shows integral spring locking clips 42 which may be incorporated into the adapter moulding 3 to engage the wall of the reservoir 2 and hold the adapter in place.

Whilst the above description places emphasis on the areas which are believed to be new and addresses specific problems which have been identified, it is intended that the features disclosed herein may be used in any combination within the scope of the appended claims.

## Claims

1. A liquid fuel burner comprising:
- a liquid fuel container (1) which includes a container body (6) having a fuel discharge port (8), and a valve assembly (9) mounted to the fuel discharge port (8), said valve assembly including a valve seat structure (14) having a valve seat (114), a valve element (17) including a valve member (21) co-operable with the valve seat, and an energizing element (24) to generate a pressing force to press the valve member (21) against the valve seat (114);
- a liquid fuel tank (2) having a fuel feed port (102);
- an attachment (3) mounted to the fuel feed port (102), said attachment including a recessed portion (103) to receive the valve seat structure (14) and an actuating pin (32) disposed inside the recessed portion (103) and configured to push up the valve element (17) when the valve seat structure (14) is received in the recessed portion (103), said recessed portion (103) having fuel discharge holes (131) to allow a liquid fuel which is discharged from the liquid fuel container (1) into the recessed portion (103) to pass through the fuel discharge holes into the liquid fuel tank (2); and
- a burner assembly (5) operable to burn liquid fuel fed from the liquid fuel tank;
**characterised in that**:
the attachment (3) includes a plurality of latch projections (34; 41) arranged in a circumferential direction to project inwardly of the recessed portion (103), each of the latch projections being associated with a resilient element (33; 40) against which each latch projection is moved in an outward direction by the valve assembly (9) when the valve assembly enters the recessed portion (103); and
the valve assembly (9) includes a circumferentially extending latching feature (36) which is engaged by the latch projections when the valve assembly (9) is within the recessed portion (103) and the actuating pin (32) acts to push up the valve element (17), said engagement between the latch projections (34; 41) and the circumferentially extending latching feature (36) being operable to overcome the pressing force of the energizing element (24) and hold the valve assembly (9) within the recessed portion (103) .

2. A liquid fuel burner according to Claim 1 wherein the circumferentially extending latching feature (36) comprises an annular groove.

3. A liquid fuel burner according to Claim 1 or Claim 2 wherein the resilient elements (33) comprise spring latch arms and the latch projections (34) comprise rollers which are rotatably received on the spring latch arms.

4. A liquid fuel burner according to Claim 1 or Claim 2 wherein the resilient elements (40) comprise spring fingers which are integrally formed with the recessed portion (103) and the latch projections (41) comprise rounded projections which are integrally formed with the spring fingers.

5. A liquid fuel burner according to any preceding claim in which the liquid fuel container (1) is a moulded plastic bottle.

## Patentansprüche

1. Brenner für Flüssigbrennstoff, der Folgendes umfasst:
einen Flüssigbrennstoffbehälter (1), der einen Behälterkörper (6) mit einer Brennstoffauslassöffnung (8) und eine Ventilanordnung (9) umfasst, die an der Brennstoffauslassöffnung (8) montiert ist, wobei die Ventilanordnung eine Ventilsitzstruktur (14) aufweist, die einen Ventilsitz (114), ein Ventilelement (17), einschließlich eines Ventilbauteils (21), das mit dem Ventilsitz zusammenwirkt, und ein Aktivierungslement (24) umfasst, um eine Druckkraft zu erzeugen, um das Ventilbauteil (21) gegen den Ventilsitz (114) zu drücken;
einen Flüssigbrennstofftank (2) mit einer Brennstoffzufuhröffnung (102);
ein Anbringungselement (3), das an der Brennstoffzufuhröffnung (102) montiert ist, wobei das Anbringungselement einen vertieften Abschnitt (103) umfasst, um die Ventilsitzstruktur (14) und einen Betätigungsstift (32) aufzunehmen, der im Inneren des vertieften Abschnitts (103) angeordnet und ausgelegt ist, um das Ventilelement (17) nach oben zu drücken, wenn die Ventilsitzstruktur (14) in dem vertieften Abschnitt (103) aufgenommen ist, wobei der vertiefte Abschnitt (103) Brennstoffablasslöcher (131) aufweist, um zu ermöglichen, dass ein Flüssigbrennstoff, der aus dem Flüssigbrennstoffbehälter (1) in den vertieften Abschnitt (103) abgelassen wird, durch die Brennstoffablasslöcher in den Flüssigbrennstofftank (2) hindurchtritt; und
eine Brenneranordnung (5), die betätigbar ist, um aus dem Flüssigbrennstofftank zugeführten Flüssigbrennstoff zu verbrennen;
**dadurch gekennzeichnet, dass**:
das Anbringungselement (3) eine Vielzahl von Verrastungsvorsprüngen (32; 41) aufweist, die in einer Umfangsrichtung angeordnet sind, damit diese von dem vertieften Abschnitt (103) nach innen hervorstehen, wobei jeder der Verrastungsvorsprünge mit einem elastischen Element (33; 40) verbunden ist, gegen das jeder Verrastungsvorsprung in eine Auswärtsrichtung durch die Ventilanordnung (9) bewegt wird, wenn die Ventilanordnung in den vertieften Abschnitt (103) eintritt; und
die Ventilanordnung (9) ein sich entlang des Umfangs erstreckendes Verrastungselement (36) umfasst, das mit den Verrastungsvorsprüngen in Eingriff gebracht wird, wenn sich die Ventilanordnung (9) innerhalb des vertieften Abschnitts (103) befindet und der Betätigungsstift (32) bewirkt, dass das Ventilelement (17) nach oben gedrückt wird, wobei der Eingriff zwischen den Verrastungsvorsprüngen (34; 41) und dem sich entlang des Umfangs erstreckenden Verrastungselement (36) ausgebildet ist, um die Druckkraft des Aktivierungselements (24) zu überwinden und die Ventilanordnung (9) innerhalb des vertieften Abschnitts (103) zu halten.

2. Brenner für Flüssigbrennstoff nach Anspruch 1, wobei das sich entlang des Umfangs erstreckende Verrastungselement (36) eine ringförmige Nut umfasst.

3. Brenner für Flüssigbrennstoff nach Anspruch 1 oder Anspruch 2, wobei die elastischen Elemente (33) Federarretierungsschenkel umfassen und die Verrastungsvorsprünge (34) Rollen umfassen, die drehbar auf den Federarretierungsschenkeln aufgenommen sind.

4. Brenner für Flüssigbrennstoff nach Anspruch 1 oder Anspruch 2, wobei die elastischen Elemente (40) Federfinger umfassen, die einstückig mit dem vertieften Abschnitt (103) ausgebildet sind und wobei die Verrastungsvorsprünge (41) abgerundete Vorsprünge umfassen, die einstückig mit den Federfingern ausgebildet sind.

5. Brenner für Flüssigbrennstoff nach einem der vorangegangenen Ansprüche, in dem der Flüssigbrennstoffbehälter (1) eine geformte Kunststoffflasche ist.

## Revendications

1. Brûleur à combustible liquide comprenant :
- un contenant de combustible liquide (1) qui comprend un corps de contenant (6) ayant un orifice de décharge de combustible (8), et un ensemble soupape (9) monté sur l'orifice de décharge de combustible (8), ledit ensemble soupape comprenant une structure de siège de soupape (14) ayant un siège de soupape (114), un élément de soupape (17) comprenant un élément de soupape (21) pouvant coopérer avec le siège de soupape, et un élément d'excitation (24) pour générer une force de pression afin de presser l'élément de soupape (21) contre le siège de soupape (114) ;
- un réservoir de combustible liquide (2) ayant un orifice d'alimentation en combustible (102) ;
- une fixation (3) montée sur l'orifice d'alimentation en combustible (102), ladite fixation comprenant une partie évidée (103) pour recevoir la structure de siège de soupape (14) et une broche d'actionnement (32) disposée à l'intérieur de la partie évidée (103) et configurée pour pousser vers le haut l'élément de soupape (17) lorsque la structure de siège de soupape (14) est reçue dans la partie évidée (103), ladite partie évidée (103) ayant des trous de décharge de combustible (131) pour permettre à un combustible liquide qui est déchargé depuis le contenant de combustible liquide (1) jusque dans la partie évidée (103) de passer à travers les trous de décharge de combustible à l'intérieur du réservoir de combustible liquide (2) ; et
- un ensemble brûleur (5) pouvant fonctionner pour brûler du combustible liquide alimenté depuis le réservoir de combustible liquide ;
**caractérisé en ce que** :
la fixation (3) comprend une pluralité de saillies de verrouillage (34 ; 41) agencées dans une direction circonférentielle pour faire saillie vers l'intérieur de la partie évidée (103), chacune des saillies de verrouillage étant associée à un élément élastique (33 ; 40) contre lequel chaque saillie de verrouillage est déplacée dans une direction vers l'extérieur par l'ensemble soupape (9) lorsque l'ensemble soupape entre dans la partie évidée (103) ; et l'ensemble soupape (9) comprend un élément de verrouillage s'étendant circonférentiellement (36) qui est mis en prise par les saillies de verrouillage lorsque l'ensemble soupape (9) est à l'intérieur de la partie évidée (103) et la broche d'actionnement (32) agit pour pousser vers le haut l'élément de soupape (17), ladite mise en prise entre les saillies de verrouillage (34 ; 41) et l'élément de verrouillage s'étendant circonférentiellement (36) pouvant être actionnée pour surpasser la force de pression de l'élément d'excitation (24) et maintenir l'ensemble soupape (9) dans le partie évidée (103).

2. Brûleur à combustible liquide selon la revendication 1, dans lequel l'élément de verrouillage s'étendant circonférentiellement (36) comprend une rainure annulaire.

3. Brûleur à combustible liquide selon la revendication 1 ou la revendication 2, dans lequel les éléments élastiques (33) comprennent des bras de verrouillage à ressort et les saillies de verrouillage (34) comprennent des rouleaux qui sont reçus de manière rotative sur les bras de verrouillage à ressort.

4. Brûleur à combustible liquide selon la revendication 1 ou 2, dans lequel les éléments élastiques (40) comprennent des languettes à ressort qui sont formés d'un seul tenant avec la partie évidée (103) et les saillies de verrouillage (41) comprennent des saillies arrondies qui sont formées d'un seul tenant avec les languettes à ressort.

5. Brûleur à combustible liquide selon l'une quelconque des revendications précédentes, dans lequel le contenant de combustible liquide (1) est un flacon en plastique moulé.
